# EUROPÄISCHE PATENTSCHRIFT

(11) **EP 3 608 622 B1**
(45) Veröffentlichungstag und Bekanntmachung des Hinweises auf die Patenterteilung: **07.06.2023**
(21) Anmeldenummer: 19179761.2
(22) Anmeldetag: 12.06.2019
(51) Int. Cl.: F41H 7/00

(54) **WAFFENSYSTEM UND VERFAHREN ZUM BETREIBEN EINES WAFFENSYSTEMS**
WEAPON SYSTEM AND METHOD FOR OPERATING SAME
SYSTÈME D'ARMES ET PROCÉDÉ DE FONCTIONNEMENT D'UN SYSTÈME D'ARMES

(30) Priorität: 09.08.2018 DE 102018006316
(43) Veröffentlichungstag der Anmeldung: 12.02.2020
(73) Patentinhaber: MBDA Deutschland GmbH, 86529 Schrobenhausen (DE)
(72) Erfinder: Grabmeier, Michael, 83022 Rosenheim (DE); Haselhofer, Heiko, 86573 Obergriesbach (DE); Ruisinger, Konrad, 86674 Baar (DE); Lieback, Rico, 86643 Rennertshofen (DE)
(74) Vertreter: Isarpatent

(56) Entgegenhaltungen:
- EP-A2- 2 333 479
- US-A1- 2005 004 723
- US-A1- 2006 089 766
- US-A1- 2008 009 970
- US-A1- 2008 086 241

## Beschreibung

Die vorliegende Erfindung betrifft ein Waffensystem und ein Verfahren zum Betreiben eines derartigen Waffensystems. Ein gattungsgemäßes Waffensystem wird in der US 2008/009970 A1 beschrieben.

Aus der Transportindustrie ist es insbesondere in Bezug auf Kraftfahrzeuge bekannt, Fahrzeuge mit unterschiedlichen Fahrassistenzsystemen auszustatten, die die Fahrzeugführung erleichtern und die Sicherheit erhöhen sollen. Neben dem rein assistierten Fahren, bei welchem ein Fahrzeugführer von Funktionalitäten des Fahrzeugs lediglich unterstützt wird, werden in jüngerer Zeit auch weiterführende Konzepte des so genannten autonomen oder automatisierten Fahrens verfolgt, bei denen ein Fahrzeug zunehmend autonom, d.h. selbstständig, agiert und dem Fahrzeugführer vermehrt Aufgaben entzogen werden. Diese Konzepte erstrecken sich von dem bereits erwähnten assistierten Fahren, über teil- und hoch automatisiertes Fahren bis hin zu vollautomatisiertem oder gar fahrerlosem Fahren.

Entsprechend zu der jeweils vorliegenden Beziehung zwischen dem Benutzer und dem Fahrzeug, oder allgemeiner zwischen dem Mensch und der Maschine, können unterschiedliche Autonomiegrade definiert werden, welche festlegen, zu welchem Anteil bestimmte Funktion und/oder Einrichtungen der Maschine von dem bedienenden Menschen einerseits und einer Steuerungseinrichtung der Maschine andererseits ausgeführt werden. Beispielsweise kann eine niedrigste Ebene der Automatisierung als "teilautonom" bezeichnet werden, bei welcher der bedienende Mensch "in-the-loop" ist, d.h. eine notwendige aktive Rolle in der Führung der Maschine übernimmt, die Maschine jedoch bestimmte Funktionen selbstständig durchführt. Systeme mit stärkerer Automatisierung können als "überwacht autonom" bezeichnet werden, wobei eine Maschine praktisch selbstständig handelt, der Mensch bei Bedarf jedoch jederzeit eingreifen kann, d.h. "on-the-loop" ist. In "vollautonomen" Systemen kann die Maschine ohne direkte Eingriffsmöglichkeit des Menschen agieren, welcher somit "out-of-the-loop" ist.

Um eine möglichst vertrauensvolle, transparente, effiziente und situationsgerechte Zusammenarbeit zwischen Mensch und Maschine zu ermöglichen, ist es aus Flexibilitätsgründen erstrebenswert, die Verteilung der Mensch-Maschine-Kompetenzen möglichst optimal zu wählen.

Beispielsweise lehrt die DE 10 2015 003 348 A1 ein Betriebsverfahren eines Kraftfahrzeugs, bei welchem mittels eines oder mehrerer Sensoren ein Benutzerzustand des Fahrzeugführers erfasst und darauf aufbauend ein Autonomiegrad des Kraftfahrzeugs festgelegt wird.

Vor diesem Hintergrund liegt der vorliegenden Erfindung die Aufgabe zugrunde, Lösungen für Waffensysteme mit verbesserter Flexibilität zu finden.

Erfindungsgemäß wird diese Aufgabe gelöst durch ein Verfahren mit den Merkmalen des Patentanspruchs 1 und durch ein Waffensystem mit den Merkmalen des Patentanspruchs 5.

Demgemäß ist ein Verfahren zum Betreiben eines Waffensystems vorgesehen. Das Waffensystem ist dazu ausgebildet, in mehreren Autonomiegraden betrieben zu werden, wobei die Autonomiegrade jeweils festlegen, zu welchem Anteil eine Funktion und/oder eine Einrichtung des Waffensystems durch eine Steuereinrichtung des Waffensystems und durch einen Benutzer des Waffensystems gesteuert wird. Das Verfahren umfasst Ermitteln eines aktuellen Autonomiegrads des Waffensystems, in welchem das Waffensystem zu betreiben ist; Aktivieren des aktuellen Autonomiegrads in dem Waffensystem; und Steuern der Funktion und/oder der Einrichtung des Waffensystems entsprechend zu dem aktivierten Autonomiegrad.

Ferner ist ein Waffensystem vorgesehen. Das Waffensystem umfasst eine Steuereinrichtung, welche dazu ausgebildet ist, eine Funktion und/oder eine Einrichtung des Waffensystems entsprechend zu einem aktivierten Autonomiegrad zu steuern, wobei der aktivierte Autonomiegrad aus mehreren Autonomiegraden auswählbar ist, welche jeweils festlegen, zu welchem Anteil die Funktion und/oder die Einrichtung des Waffensystems durch die Steuereinrichtung und durch einen Benutzer des Waffensystems gesteuert wird; und eine Regeleinrichtung, welche dazu ausgebildet ist, einen aktuellen Autonomiegrad des Waffensystems zu ermitteln, in welchem das Waffensystem zu betreiben ist, und den aktuellen Autonomiegrad in dem Waffensystem zu aktivieren.

Eine der vorliegenden Erfindung zugrunde liegende Idee besteht darin, einen Automatisierungsgrad bzw. einen Autonomiegrad für ein Waffensystem zu ermitteln, der für eine aktuelle Einsatzsituation des Waffensystems optimal ist, und das Waffensystem in diesem Autonomiegrad zu betreiben. Die vorliegende Erfindung sieht hierzu eine übergeordnete, funktionale Instanz zur Steuerung bzw. Regelung des Autonomiegrades vor, d.h. eine adaptive Autonomieregelung. Hierdurch kann das Waffensystem jederzeit in situationsbedingt möglichst flexibler und effizienter Weise eingesetzt werden. Es können somit die kognitiven Vorteile des Menschen mit den maschinellen Vorzügen eines Automaten bestmöglich kombiniert werden. Ferner kann durch die Autonomie des Waffensystems grundsätzlich ein größeres Maß an Geschwindigkeit, Genauigkeit, Ausdauer, Reichweite und Koordination bei geringeren Betriebskosten und effizienterem Ressourceneinsatz erreicht werden. Die vorliegende Erfindung stellt eine Regelfunktion bereit, wobei ein Mensch-Maschine-Team durch taktische Entscheidungen auf die Umwelt einwirkt und hierbei beispielsweise auf eine Gefechtsszene einwirken kann, wodurch sich z.B. der Bedrohungsgrad als Einflussgröße der adaptiven Autonomieregelung verändert (Regelkreis). Das Ergebnis dieser Regelung ist ein selektierter Autonomiegrad, der der zentralen Ablaufsteuerung des Waffensystems übergeben werden kann.

Unter einem autonomen Waffensystem wird vorliegend ein Waffensystem verstanden, d.h. eine Maschine bzw. ein Automat, das nach seiner Aktivierung bestimme Aufgaben oder Funktionen selbstständig ausführen kann, während bestimmte Aufgaben weiterhin von einem Operator, d.h. einem Menschen, ausgeführt werden können bzw. müssen. Aus technischer Sicht bedeutet Autonomie, dass Daten aus der Umwelt maschinell in zweckmäßige Pläne und Aktionen umgewandelt werden. Hierbei kann Autonomie beispielsweise durch die Integration dreier grundlegender Fähigkeiten ermöglicht werden: Sensieren (z.B. ein Gefechtsfeld auswerten, Objekte detektieren, diskriminieren und/oder verfolgen, Objekte klassifizieren und/oder identifizieren etc.), Planen/Entscheiden (z.B. eine Szene analysieren, einen Standortwechsel entscheiden, ein Ziel auswählen, zuweisen, verfolgen und/oder wechsein, eine Szene bewerten, einen Missionsabbruch entscheiden usw.) und Agieren (Wirkmittel aktivieren und/oder zum Ziel führen etc.). Waffensysteme gemäß der Erfindung umfassen unter anderem bemannten und unbemannte Gefechtsfahrzeuge, wie Bodenfahrzeuge, Seefahrzeuge oder Luftfahrzeuge, Luftabwehr- bzw. Luftverteidigungssysteme, Waffenstationen, Artilleriesysteme, Geschütze, Militärroboter, z.B. Grenzschutzroboter etc.

Autonomie ist bei unterschiedlichen funktionalen Aspekten eines Waffensystems von Interesse:
- Mobilität: dazu gehören Funktionen, die es dem System ermöglichen, seine eigene Bewegung innerhalb seiner Betriebsumgebung zu steuern, ohne dass ein menschlicher Bediener direkt involviert sein muss;
- Zielauswahl und Zielbekämpfung: alle Schritte des Zielfindungsprozesses von der Identifizierung, Verfolgung, Priorisierung, Auswahl von Zielen bis zum Wirkmitteleinsatz können Gegenstand einer Automatisierung sein;
- Aufklärung: Autonomie wird hierbei genutzt, um verschiedene Arten von Informationen zu sammeln und zu verarbeiten, die möglicherweise nicht direkt mit der Zielerfassung zusammenhängen, die jedoch dennoch von entscheidender Bedeutung sein können;
- Interoperabilität: welche hier als die Fähigkeit von militärischer Ausrüstung und Truppen definiert wird, die es ermöglicht miteinander zu kooperieren, also militärische Systeme, die Aufgaben oder eine Mission in Kooperation mit anderen militärischen Systemen ausführen können;
- Materialerhaltung: womit Funktionen gemeint sind, die Selbstwartung und Selbstreparatur ermöglichen.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der aktuelle Autonomiegrad von einem externen Operator und/oder von dem Benutzer vorgegeben werden. Beispielsweise kann ein externer, übergeordneter Operator den Autonomiegrad missionsabhängig und eventuell ferngesteuert bzw. über ein drahtloses Netzwerk konfigurieren, z.B. kann situationsbedingt, insbesondere vorübergehend, ein fixer Autonomiegrad eingestellt werden.

Erfindungsgemäß umfasst das Verfahren weiterhin Regeln des aktuellen Autonomiegrads in Abhängigkeit von Operationsparametern. Entsprechend ist die Regeleinrichtung dazu ausgebildet, den aktuellen Autonomiegrad in Abhängigkeit von Operationsparametern zu regeln. Erfindungsgemäß wird die Regelung des Autonomiegrades in Abhängigkeit von einem Status des Benutzers bzw. Operators durchgeführt. Ferner kann die Regelung des Autonomiegrades in Abhängigkeit von einem Status des Waffensystems bzw. einer mit diesem verbundenen Komponente wie einem Gefechtsfahrzeug oder dergleichen, von der Komplexität der Szene (kognitive Leistungsgrenzen, Wetter etc.), von einer Bedrohungslage (eigene oder von einem zu schützendem Objekt), von einem Potenzial für Kollateralschäden, von missionsspezifischen Einsatzregeln usw. durchgeführt werden. Je komplexer eine Szene ist, desto geringer kann ein maschineller Anteil und desto größer ein kognitiver, d.h. menschlicher, Anteil zu einer Szenen-Analyse und/oder zu taktischen Entscheidungen beitragen. Je akuter und kritischer eine Bedrohung ist, umso stärker können maschinelle Echtzeit-Entscheidungen bei entsprechend verringertem menschlichen Anteil beispielsweise als absichernder Operator gewichtet werden. Bei einem großen Potenzial für Kollateralschäden kann der kognitiv-menschlicher Einsatz gegenüber maschinell-taktische Entscheidungen in den Vordergrund gestellt werden. Umso schlechter ein "Health-Status" des Waffensystems oder eines Gefechtsfahrzeugs ist, desto geringer kann der Anteil der maschinellen taktischen Entscheidungen angesetzt werden. Bei einem besonders leistungsfähigen Operator kann dessen menschliche Analyse und taktische Entscheidungen einen erheblichen Beitrag liefern. Andererseits können bei einem ermüdeten oder aus anderen Gründen nur beschränkt einsatzfähigen Operator erheblichere maschinelle Anteile an Analyse und Entscheidungen vorgesehen sein.

Gemäß einer Weiterbildung können die Operationsparameter Umgebungsdaten des Waffensystems, Funktionsdaten des Waffensystems und/oder missionsspezifischen Operationsdaten für das Waffensystem umfassen. Beispielsweise kann eine Sensorik vorgesehen sein, die Vitalparameter des Benutzers erfasst, auf deren Basis dessen Einsatzfähigkeit analysiert wird. Beispielsweise kann der Benutzerzustand anhand einer Herzfrequenz, eines Blutdrucks, einer Körpertemperatur, einer Atemfrequenz, einer Gesichtsfarbe, einer Lidschlagfrequenz usw. des Benutzers ermittelt werden. Entsprechend zu dem erfassten Benutzerzustand kann nun ein geeigneter Autonomiegrad ausgewählt werden. Umgebungsdaten des Waffensystems umfassen einerseits beispielsweise Umweltinformationen, wie Temperatur, Druck, Windstärke, Wetterbedingungen, topografische Informationen beispielsweise über das umliegende Gelände, andererseits jedoch ebenso Informationen über die Anwesenheit und/oder die Bewegungen von möglicherweise feindlichen Objekten, Fahrzeugen, Personen usw. Beispielsweise kann das Waffensystem in der üblichen Art und Weise ein System zur Erfassung und Klassifizierung von Objekten aufweisen, die maschinell und/oder manuell identifiziert werden können. Funktionsdaten des Waffensystems können wiederum beispielsweise Daten über die Einsatzfähigkeit des Waffensystems und/oder einzelner Komponenten des Waffensystems umfassen, während missionsspezifische Operationsdaten beispielsweise einsatzabhängige Regeln bzw. Einschränkungen beinhalten können.

Gemäß einer Weiterbildung können die Autonomiegrade einen vollautonomen Betrieb, einen überwacht autonomen Betrieb, einen teilautonomen Betrieb und einen manuellen Betrieb umfassen. In beispielhaften Ausführungen kann vorgesehen sein, dass der aktuelle Autonomiegrad zwischen zweien oder mehreren dieser Autonomiegrade variiert wird. Beispielsweise kann eine stufenlose Veränderung des aktuellen Autonomiegrads von einem manuellen Betrieb zu einem teilautonomen Betrieb hin zu einem überwacht autonomen Betrieb vorgesehen sein. In einem anderen Beispiel können jedoch ebenso diskrete einstellbare Autonomiegrade oder Sets aus Autonomiegraden definiert werden, die je nach Situation ausgewählt werden können.

Gemäß einer Weiterbildung können Autonomiegradgrenzen vorgegeben werden, innerhalb welcher der Autonomiegrad geregelt wird. Beispielsweise kann ein maximal und/oder minimal zulässiger Autonomiegrad vorgesehen sein, den das Waffensystem höchstens/mindestens einnehmen darf. Gegebenenfalls kann alternativ oder zusätzlich bei einer Änderung des Autonomiegrades zunächst eine Autorisierung durch einen externen Operator bzw. den Benutzer angefordert werden.

Gemäß einer Weiterbildung kann die Funktion und/oder die Einrichtung eine Erfassungseinrichtung, eine Planungseinrichtung, eine Entscheidungseinrichtung, eine Aktorik, eine Effektorik und/oder ein Wirksystem des Waffensystems umfassen. Eine Erfassungseinrichtung kann beispielsweise eine Sensorik umfassen, die eine Vielzahl von über das Waffensystem verteilten Sensoren aufweist. Derartige Sensoren können dazu dienen, ein Gefechtsfeld zu überwachen und um Ziele zu erfassen, d.h. letztendlich ein Abbild der Systemumgebung zu erhalten, welches maschinell verarbeitet werden kann. Eine derartige Erfassungseinrichtung kann zusammen mit einer Planungs- und/oder Entscheidungseinrichtung in eine leistungsfähige Computer- und Kommunikationsstruktur des Waffensystems eingebettet sein. Mittels eines derartigen Systems kann beispielsweise eine aktuelle Situation um das Waffensystem herum festgestellt, z.B. mittels Mustererkennung, und analysiert werden, sodass Einsatzentscheidungen getroffen werden können. Hierzu kann beispielsweise ein Umgebungsmodell aufgestellt werden, das sämtliche Umweltinformationen enthält, um daraus eine Situationsanalyse abzuleiten und eine Manöverplanung durchführen zu können. Je nach Anforderung der aktuellen Situation können hierzu einzelne oder mehrere der Sensoren aktiviert bzw. deaktiviert und/oder konfiguriert werden. Ferner können Aktoren, Effektoren und/oder Wirkmittel Teil des Systems sein. Unter Effektoren werden vorliegen diejenigen Komponenten verstanden, welche physische Einfluss auf die Umwelt ausüben: Räder, Beine und Flügel zur Fortbewegung, sowie Greifer und dergleichen. Aktoren hingegen bezeichnen die "Muskeln", welche es den (End-)Effektoren ermöglichen, Kräfte auszuüben, und beinhalten Komponenten wie Elektromotoren, hydraulische und/oder pneumatische Zylinder usw. Die Aktuatoren und Endeffektoren können direkt oder indirekt mit Sensoren gekoppelt sein, die entsprechende Informationen über eine (erfolgreiche) Ausführung der jeweiligen Aufgabe geben (z.B. ein Flugkörper mit einem Datenlink zu einem Trägersystem). Ferner kann die Funktion und/oder die Einrichtung Wirkmittel umfassen, wie Geschütze, gelenkte oder ungelenkte Flugkörper, etc.

Insbesondere kann die Funktion und/oder die Einrichtung grundlegende Fähigkeiten für einen autonomen Betrieb eines Waffensystems steuern, nämlich Sensieren, Planen/Entscheiden und Agieren. Es lassen sich hierbei zumindest zwei generische Kategorien von Planungs- und Entscheidungssystemen identifizieren: reaktive Planungs- und Entscheidungssysteme (einfach oder modellbasiert) und abwägende Planungs- und Entscheidungssysteme (ziel- oder nutzungsbasiert).

Reaktive Planungs- und Entscheidungssysteme können in zwei Untertypen unterteilt werden. Einerseits einfache Reflexsysteme, welche lediglich aus einer Reihe von Bedingungs-Aktions-Regeln bestehen (auch als "Wenn-Dann-Regeln" bekannt), die explizit vorschreiben, wie das System auf einen gegebenen sensorischen Input reagieren soll. Andererseits modellbasierte Reflexsysteme, welche ein komplexeres Design aufweisen und unter anderem ein mathematisches Weltmodell umfassen. Die zusätzlichen Informationen, die das Modell liefert, tragen zur Verbesserung der Leistung und Zuverlässigkeit bei, da es dem Entscheidungssystem hilft, den Verlauf seiner Wahrnehmung und Teile der Umgebung zu überwachen, die es durch seine Sensoren unter Umständen nicht beobachten kann. Wie einfache Reflex-Entscheidungssysteme folgen modellbasierte Reflex-Entscheidungssysteme einem festen Satz von Regeln.

Abwägende Planungs- und Entscheidungssysteme weisen ein Modell der Welt und eine Wertfunktion auf, wobei letztere Informationen über das gewünschte Ziel liefert. Ferner sind Regeln vorgesehen, die dem System helfen, zu planen, wie ein bestimmtes das Ziel erreicht werden soll. Abwägende Planungs- und Entscheidungssysteme wägen die Folgen möglicher Handlungen ab und messen, ob und in welchem Umfang sie der Erreichung des Ziels dienen. Abwägende Planungs- und Entscheidungssysteme verfügen über eine abwägende Intelligenz oder Selbstkontrolle, die Reflexsysteme häufig nicht aufweisen. Sie durchlaufen nicht lediglich eine Reihe vorprogrammierter Aktionen, sondern können über mögliche Konsequenzen von Handlungen nachdenken und entsprechend handeln. Hieraus ergibt sich als ein zentraler Vorteil eine verbesserte Flexibilität. Des Weiteren können sie mit Szenarien umgehen, die in der Entwurfsphase nicht vorhersehbar waren.

Erfindungsgemäß weist das Waffensystem eine Erfassungseinrichtung auf. Die Erfassungseinrichtung ist dazu ausgebildet, einen Benutzerzustand des Benutzers zu erfassen. Weiterhin kann die Erfassungseinrichtung dazu ausgebildet sein, Umgebungsdaten des Waffensystems, Funktionsdaten des Waffensystems und/oder missionsspezifische Operationsdaten für das Waffensystem zu erfassen. Hierzu kann die Erfassungseinrichtung insbesondere eine entsprechende Sensorik umfassen.

Gemäß einer Weiterbildung kann das Waffensystem als autonomes Fahrzeug ausgebildet und/oder mit einem autonomen Fahrzeug gekoppelt sein. Die Funktion und/oder die Einrichtung kann ein autonomes Fahrsystem des autonomen Fahrzeugs umfassen und/oder mit einem autonomen Fahrsystem gekoppelt sein. Beispielsweise kann derart ein Kommando zu einem autonomen Stellungswechsel ausgegeben werden. In ähnlicher Weise kann das Waffensystem alternativ oder zusätzlich an eine Funktion zum autonomen Bekämpfen eines weiteren Waffensystems gekoppelt werden. Prinzipiell ist es derart möglich grundsätzlich voneinander unabhängige autonome Waffensystem miteinander zu koppeln, wobei die Waffensysteme nicht nur kommunikativ miteinander verbunden sein können, sondern weiterhin Steuer- und/oder Regelkommandos untereinander austauschen können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht eines Waffensystems gemäß einer Ausführungsform der Erfindung; und
- Fig. 2: schematisches Ablaufdiagramm eines Verfahrens zum Betreiben des Waffensystems aus Fig. 1 gemäß einer Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

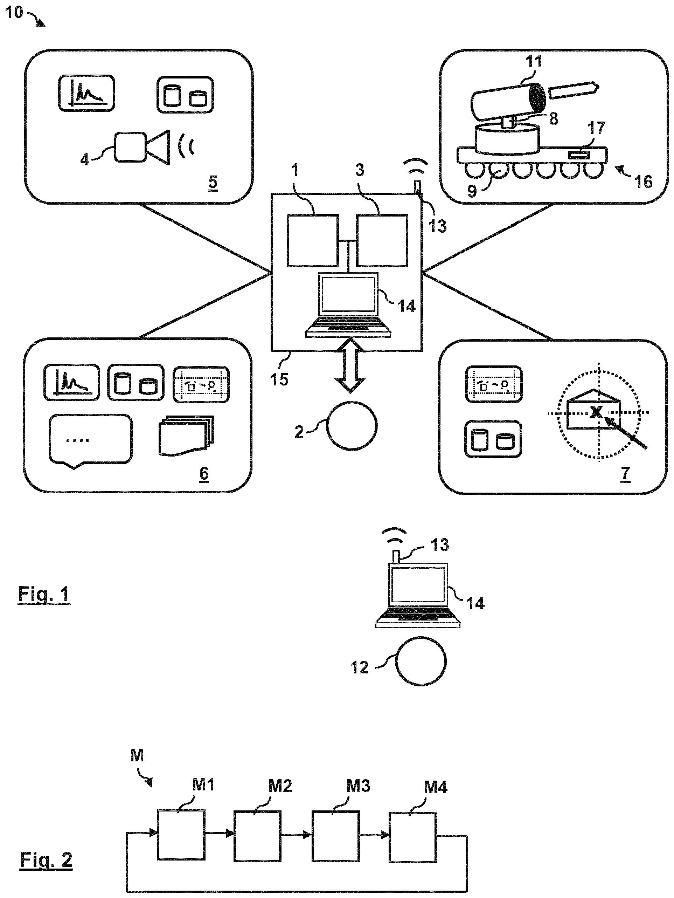

Figur 1 zeigt eine schematische Ansicht eines Waffensystems 10 gemäß einer Ausführungsform der Erfindung. Fig. 2 zeigt ein schematisches Ablaufdiagramm eines Verfahrens M zum Betreiben des Waffensystems 10 aus Fig. 1 gemäß einer Ausführungsform der Erfindung. Bei dem Waffensystem 10 handelt es sich in der beispielhaften Ausführung konkret um ein mobiles Luftverteidigungssystem (vgl. Fig. 1 rechts oben).

Das Waffensystem 10 ist dazu ausgebildet, in mehreren Autonomiegraden betrieben zu werden. Die Autonomiegrade legen hierbei jeweils fest, zu welchem Anteil mehrere Funktionen und/oder Einrichtungen 5, 6, 7, 8, 9, 11, 17 des Waffensystems 10 durch eine Steuereinrichtung 1 des Waffensystems 10 auf der einen Seite und durch einen Benutzer 2 (ein Operator) des Waffensystems 10 auf der anderen Seite gesteuert werden. Zu diesem Zweck umfasst das Waffensystem 10 eine Steuereinrichtung 1, welche dazu ausgebildet ist, die Funktionen und/oder die Einrichtungen 5, 6, 7, 8, 9, 11, 17 des Waffensystems 10 entsprechend zu einem aktivierten Autonomiegrad zu steuern, wobei der aktivierte Autonomiegrad aus mehreren Autonomiegraden auswählbar ist. Ferner umfasst das Waffensystem 10 eine Regeleinrichtung 3, welche dazu ausgebildet ist, einen aktuellen Autonomiegrad des Waffensystems 10 zu ermitteln, in welchem das Waffensystem 10 zu betreiben ist, und den aktuellen Autonomiegrad in dem Waffensystem 10 zu aktivieren.

Die Steuereinrichtung 1 und die Regeleinrichtung 3 sind Teilkomponenten eines Computersystems 15 des Waffensystems 10, mit welchem der Benutzer 2 beispielsweise über ein Terminal 14 in Verbindung treten kann. Ferner kann ebenso ein externer Operator 12 über eine drahtlose Verbindung mit dem Computersystem 15 in Verbindung treten. Bei dem Computersystem 15 handelt es sich in diesem Beispiel um ein zentrales Steuerungssystem des Waffensystems 10, über welches unterschiedliche Funktionen und/oder Einrichtungen 5, 6, 7, 8, 9, 11, 17 des Waffensystems 10 steuerbar sind.

Das Verfahren M umfasst entsprechend unter M1 Ermitteln eines aktuellen Autonomiegrads des Waffensystems 10, in welchem das Waffensystem 10 zu betreiben ist. Das Verfahren M umfasst unter M2 ferner Aktivieren des aktuellen Autonomiegrads in dem Waffensystem 10 und unter M3 Steuern der Funktion und/oder der Einrichtung 5, 6, 7, 8, 9, 11, 17 des Waffensystems 10 entsprechend zu dem aktivierten Autonomiegrad. Der aktuelle Autonomiegrad wird unter M4 in Abhängigkeit von Operationsparametern geregelt. Grundsätzlich kann hierbei vorgesehen sein, dass der aktuelle Autonomiegrad von einem externen Operator 12 und/oder von dem Benutzer 2 vorgegeben wird, z.B. kann für einen vorgegebenen Zeitraum ein bestimmter Autonomiegrad fixiert werden. Davon unabhängig ist das Waffensystem 10 jedoch dafür ausgebildet, die Autonomiegrade zu regeln, z.B. innerhalb von Autonomiegradgrenzen, die beispielsweise von dem Benutzer 2, dem externen Operator 12 oder anderweitig vorgegeben werden. Beispielsweise kann vorgesehen sein, dass der aktuelle Autonomiegrad zwischen einem vollautonomen Betrieb, einem überwacht autonomen Betrieb, einem teilautonomen Betrieb und/oder einem manuellen Betrieb variiert wird. Prinzipiell kann es hierbei vorgesehen sein, dass die Veränderung stufenlos möglich ist. Alternativ oder zusätzlich können diskrete einstellbare Autonomiegrade definiert werden (siehe weiter unten).

Die Operationsparameter können hierbei einen Benutzerzustand des Benutzers 2, z.B. Vitalparameter des Benutzers 2, Umgebungsdaten des Waffensystems 10, z.B. Umweltdaten und/oder ein detailliertes Umgebungsbild des Waffensystems 10, Funktionsdaten des Waffensystems 10, z.B. eine Funktionsbereitschaft des Waffensystems 10, und/oder missionsspezifische Operationsdaten für das Waffensystem 10, z.B. Einsatzregeln und/oder Einsatzrichtlinien, umfassen.

Die Funktionen bzw. Einrichtungen 5, 6, 7, 8, 9, 11, 17 umfassen in dieser beispielhaften Ausführung eine Erfassungseinrichtung 5 mit einer Sensorik 4, eine Planungseinrichtung 6, eine Entscheidungseinrichtung 7, eine Aktorik 8, eine Effektorik 9 sowie ein Wirksystem 11 des Waffensystems 10. Alle diese Funktionen bzw. Einrichtungen sind mit dem zentralen Computersystem 15 des Waffensystems 10 kommunikativ verbunden, z.B. über eine oder mehrere Datenleitungen und/oder über eine drahtlose Verbindung, und/oder sind in dieses als Teilkomponente eingebettet (z.B. als Hardware und/oder Software). Das zentrale Computersystem 15 ist dazu ausgebildet, diese Komponenten entsprechend zu dem aktivierten Autonomiegrad zu steuern. Der Benutzer 2 hat hierdurch lediglich denjenigen Anteil der Funktionen des Systems zu übernehmen, welcher entsprechend bei dem aktivierten Autonomiegrad nicht von dem Waffensystem 10 übernommen wird. Das Waffensystem 10 stellt somit ein Mensch-Maschine-Team dar, bei welchem ein Teil der Funktionen automatisch bzw. autonom von der Maschine ausgeführt werden, während ein anderer Teil der Funktionen von dem Menschen verantwortet werden. Im Ergebnis werden somit die kognitiven Vorteile des Menschen mit den maschinellen Vorzügen eines Automaten bestmöglich kombiniert, indem ein Autonomiegrad adaptiv geregelt wird.

Mögliche Aktionsspielräume des Menschen im Mensch-Maschine-Team können wie folgt definiert werden:
- Essentieller Operator (EO): Nur der menschliche Bediener führt entscheidende Aktionen durch, um Zielangriffe genau und effektiv abzuschließen.
- Kooperativer Operator (CO): Der menschliche Bediener kooperiert zunächst gleichwertig mit der Maschine, um einen Bekämpfungsvorgang genau und effektiv durchzuführen.
- Moralisch Bevollmächtigter/Agent (MA): Der menschliche Betreiber nimmt Werturteile darüber vor, ob der vorgesehene Einsatz angemessen ist. Beispielsweise entscheidet der menschliche Betreiber, ob die militärische Notwendigkeit, ein bestimmtes Ziel in einer bestimmten Situation zu zerstören, gegenüber dem potenziellen Kollateralschaden überwiegt.
- Absichernder Operator (AO): Der menschliche Bediener hat die Fähigkeit einzugreifen und den Betrieb der Maschine zu verändern oder zu stoppen, wenn die Waffe beispielsweise in ihrer Funktionsfähigkeit eingeschränkt ist oder wenn sich die Umstände derart ändern, dass die getroffene Entscheidung nicht mehr angemessen ist.

Für jede Aufgabe/Funktion kann festgelegt werden, in wieweit der Mensch bzw. der Automat involviert sind:
- Mensch dominiert (EO, MA),
- halbautonomer Automat (CO, "human in-the-loop"),
- überwacht autonomer Automat (AO, "human on-the-loop",
- völlig autonomer Automat (AU, "human out-of-the-loop"), oder
- Mischformen.

In einem konkreten Beispiel können diskrete Autonomiegrade wie folgt definiert werden, wobei mit steigendem Autonomiegrad die erwähnten Funktionen zusätzlich von der Maschine, d.h. dem Waffensystem, ausgeführt werden:
Grad 1: maschinelles Detektieren/Verfolgen eines Objekts
Grad 2.X: maschinelles Klassifizieren/Identifizieren des Objekts
   - Grad 2.1: der Mensch bzw. Operator (CO) kann die maschinelle Ergebnisse des Automaten modifizieren und damit übersteuern oder löschen oder akzeptieren:
      - Klassifizierung/Identifizierung
      - Freund/Feind
      - Ziel zerstört oder beeinträchtigt oder unverändert
   - Grad 2.2: die Möglichkeiten des Menschen, den Automaten hinsichtlich der vorher genannten Aufgaben zu korrigieren, sind deaktiviert
Grad 3.X: maschinelle Szenen-Analyse:
   - Grad 3.1: der Mensch (MA) kann neue Elemente in die Szenen-Analyse einbringen oder löschen und das Ergebnis der Szenen-Analyse modifizieren
   - Grad 3.2: der Mensch (MA) kann nur das Ergebnis der Szenen-Analyse modifizieren
   - Grad 3.3: keine Operatorkorrektur bzgl. der Szenen-Analyse
Grad 4.X: maschinelles, taktisches Entscheiden:
   - Grad 4.1: der Mensch (MA) bestätigt alle taktischen Entscheidungen des Automaten ("human in-the-loop")
   - Grad 4.2: der Mensch (MA, AO) bestätigt nur das Engagement und kann die Mission abbrechen ("human in-the-loop")
   - Grad 4.3: der Mensch (AO) kann lediglich die Mission als solche abbrechen ("human on-the-loop")
   - Grad 4.4: operatorlos, alle taktischen Entscheidungen erfolgen durch den Automaten ggf. im Verbund mit anderen Waffensystemen ("human out-of-the-loop").

Auf einem ersten Autonomiegrad kann somit vorgesehen sein, dass Objekte maschinell detektiert und/oder verfolgt werden. Auf einem zweiten, höheren Autonomiegrad kann zusätzlich vorgesehen sein, dass Objekte maschinell klassifiziert und/oder identifiziert werden. Auf einem dritten, höheren Autonomiegrad kann zusätzlich vorgesehen sein, dass eine Szenenanalyse maschinell durchgeführt wird. Auf einem vierten, höheren Autonomiegrad kann zusätzlich vorgesehen sein, dass das Waffensystem taktische Entscheidung trifft, wobei der Benutzer bzw. Operator in die Entscheidungen ggf. eingreifen oder diese zumindest abrechen kann. Der Mensch, d.h. der Operator bzw. Benutzer, kann hierbei mit dem Waffensystem lokal oder von extern über Datenverbindungen interagieren. Das Waffensystem 10 kann dazu ausgebildet sein, die Autonomiegrade 1, 2.X, 3.X und 4.Xjeweils situationsbedingt auszuwählen und zu aktivieren.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Steuervorrichtung
- 2: Benutzer
- 3: Regelvorrichtung
- 4: Sensorik
- 5: Erfassungseinrichtung
- 6: Planungseinrichtung
- 7: Entscheidungseinrichtung
- 8: Aktorik
- 9: Effektorik
- 10: Waffensystem
- 11: Wirksystem
- 12: externer Operator
- 13: Antenne
- 14: Terminal
- 15: Computersystem
- 16: autonomes Fahrzeug
- 17: autonomes Fahrsystem

## Patentansprüche

1. Verfahren (M) zum Betreiben eines Waffensystems (10), wobei das Waffensystem (10) dazu ausgebildet ist, in mehreren Autonomiegraden betrieben zu werden, wobei die Autonomiegrade jeweils festlegen, zu welchem Anteil eine Funktion und/oder eine Einrichtung (5, 6, 7, 8, 9, 11, 17) des Waffensystems (10) durch eine Steuereinrichtung (1) des Waffensystems (10) und durch einen Benutzer (2) des Waffensystems (10) gesteuert wird, wobei das Verfahren (M) umfasst:
Ermitteln (M1) eines aktuellen Autonomiegrads des Waffensystems (10) durch eine Regeleinrichtung (3) des Waffensystems, in welchem das Waffensystem (10) zu betreiben ist;
Aktivieren (M2) des aktuellen Autonomiegrads in dem Waffensystem (10) durch die Regeleinrichtung (3);
Steuern (M3) der Funktion und/oder der Einrichtung (5, 6, 7, 8, 9, 11, 17) des Waffensystems (10) entsprechend zu dem aktivierten Autonomiegrad durch die Steuereinrichtung (1); und
Regeln (M4) des aktuellen Autonomiegrads in Abhängigkeit von Operationsparametern durch die Regeleinrichtung (3);
**dadurch gekennzeichnet, dass**
die Operationsparameter einen Benutzerzustand des Benutzers (2) des Waffensystems (10) umfassen, welcher mit einer Erfassungseinrichtung (5) des Waffensystems erfasst wird und Vitalparameter des Benutzers (2) beinhaltet.

2. Verfahren (M) nach Anspruch 1, wobei die Autonomiegrade zumindest eines von einem vollautonomen Betrieb, einem überwacht autonomen Betrieb, einem teilautonomen Betrieb und einem manuellen Betrieb umfassen.

3. Verfahren (M) nach einem der Ansprüche 1 und 2, wobei Autonomiegradgrenzen vorgegeben werden, innerhalb welcher der Autonomiegrad geregelt wird.

4. Verfahren (M) nach einem der Ansprüche 1 bis 3, wobei die Funktion und/oder die Einrichtung (5, 6, 7, 8, 9, 11, 17) zumindest eines von der Erfassungseinrichtung (5), einer Planungseinrichtung (6), einer Entscheidungseinrichtung (7), einer Aktorik (8), einer Effektorik (9) und einem Wirksystem (11) des Waffensystems (10) umfasst.

5. Waffensystem (10), mit
einer Steuereinrichtung (1), welche dazu ausgebildet ist, eine Funktion und/oder eine Einrichtung (5, 6, 7, 8, 9, 11, 17) des Waffensystems (10) entsprechend zu einem aktivierten Autonomiegrad zu steuern, wobei der aktivierte Autonomiegrad aus mehreren Autonomiegraden auswählbar ist, welche jeweils festlegen, zu welchem Anteil die Funktion und/oder die Einrichtung (5, 6, 7, 8, 9, 11, 17) des Waffensystems (10) durch die Steuereinrichtung (1) und durch einen Benutzer (2) des Waffensystems (10) gesteuert wird;
einer Regeleinrichtung (3), welche dazu ausgebildet ist, einen aktuellen Autonomiegrad des Waffensystems (10) zu ermitteln, in welchem das Waffensystem (10) zu betreiben ist, und den aktuellen Autonomiegrad in dem Waffensystem (10) zu aktivieren, wobei die Regeleinrichtung (3) dazu ausgebildet ist, den aktuellen Autonomiegrad in Abhängigkeit von Operationsparametern zu regeln;
**gekennzeichnet durch**
eine Erfassungseinrichtung (5), welche dazu ausgebildet ist, einen Benutzerzustand des Benutzers (2) des Waffensystems (10) zu erfassen, wobei die Operationsparameter den Benutzerzustand des Benutzers (2) umfassen, wobei der Benutzerzustand Vitalparameter des Benutzers (2) beinhaltet.

6. Waffensystem (10) nach Anspruch 5, wobei die Autonomiegrade zumindest eines von einem vollautonomen Betrieb, einem überwacht autonomen Betrieb, einem teilautonomen Betrieb und einem manuellen Betrieb umfassen.

7. Waffensystem (10) nach einem der Ansprüche 5 und 6, wobei Autonomiegradgrenzen vorgebbar sind, innerhalb welcher der Autonomiegrad regelbar ist.

8. Waffensystem (10) nach einem der Ansprüche 5 bis 7, wobei die Funktion und/oder die Einrichtung (5, 6, 7, 8, 9, 11, 17) zumindest eines von der Erfassungseinrichtung (5), einer Planungseinrichtung (6), einer Entscheidungseinrichtung (7), einer Aktorik (8), einer Effektorik (9) und einem Wirksystem (11) des Waffensystems (10) umfasst.

9. Waffensystem (10) nach einem der Ansprüche 5 bis 8, wobei das Waffensystem (10) als autonomes Fahrzeug (16) ausgebildet ist, wobei die Funktion und/oder die Einrichtung (5, 6, 7, 8, 9, 11, 17) ein autonomes Fahrsystem (17) des autonomen Fahrzeugs (16) umfasst.

## Claims

1. Method (M) for operating a weapon system (10), the weapon system (10) being configured to be operated with a plurality of degrees of autonomy, the degrees of autonomy each establishing what proportion of a functionality and/or setup (5, 6, 7, 8, 9, 11, 17) of the weapon system (10) is controlled by a control device (1) of the weapon system (10) and by a user (2) of the weapon system (10), the method (M) comprising:
determining (M1) a current degree of autonomy of the weapon system (10), in which the weapon system (10) is to be operated, by way of a regulation device (3) of the weapon system;
activating (M2) the current degree of autonomy in the weapon system (10) by way of the regulation device (3);
controlling (M3) the functionality and/or setup (5, 6, 7, 8, 9, 11, 17) of the weapon system (10) in accordance with the activated degree of autonomy by way of the control device (1); and
regulating (M4) the current degree of autonomy as a function of operating parameters by way of the regulation device (3) ;
**characterised in that**
the operating parameters include a user state of the user (2) of the weapon system (10), which is detected using a detection device (5) of the weapon system and includes vital parameters of the user (2).

2. Method (M) according to claim 1, wherein the degrees of autonomy include at least one of fully autonomous operation, monitored autonomous operation, partially autonomous operation and manual operation.

3. Method (M) according either claim 1 or claim 2, wherein degree of autonomy limits, within which the degree of autonomy is regulated, are specified.

4. Method (M) according to any of claims 1 to 3, wherein the functionality and/or setup (5, 6, 7, 8, 9, 11, 17) includes at least one of the detection device (5), a planning device (6), a decision device (7), an actuator system (8), an effector system (9) and an action system (11) of the weapon system (10).

5. Weapon system (10), comprising
a control device (1) configured to control a functionality and/or setup (5, 6, 7, 8, 9, 11, 17) of the weapon system (10) in accordance with an activated degree of autonomy, the activated degree of autonomy being selectable from a plurality of degrees of autonomy, which each establish what proportion of the functionality and/or setup (5, 6, 7, 8, 9, 11, 17) of the weapon system (10) is controlled by the control device (1) and by a user (2) of the weapon system (10) ;
a regulation device (3) configured to determine a current degree of autonomy of the weapon system (10) in which the weapon system (10) is to be operated and to activate the current degree of autonomy in the weapon system (10), the regulation device (3) being configured to regulate the current degree of autonomy as a function of operating parameters;
**characterised by**
a detection device (5) configured to detect a user state of the user (2) of the weapon system (10), the operating parameters including the user state of the user (2), the user state including vital parameters of the user (2).

6. Weapon system (10) according to claim 5, wherein the degrees of autonomy include at least one of fully autonomous operation, monitored autonomous operation, partially autonomous operation and manual operation.

7. Weapon system according to either claim 5 or claim 6, wherein degree of autonomy limits, within which the degree of autonomy is regulated, are specified.

8. Weapon system (10) according to any of claims 5 to 7, wherein the functionality and/or setup (5, 6, 7, 8, 9, 11, 17) include at least one of the detection device (5), a planning device (6), a decision device (7), an actuator system (8), an effector system (9) and an action system (11) of the weapon system (10).

9. Weapon system (10) according to any of claims 5 to 8, wherein the weapon system (10) is configured as an autonomous vehicle (16), the functionality and/or setup (5, 6, 7, 8, 9, 11, 17) including an autonomous driving system (17) of the autonomous vehicle (16).

## Revendications

1. Procédé (M) pour faire fonctionner un système d'arme (10), le système d'arme (10) étant conçu pour fonctionner en plusieurs degrés d'autonomie, les degrés d'autonomie déterminant respectivement dans quelle proportion une fonction et/ou un dispositif (5, 6, 7, 8, 9, 11, 17) du système d'arme (10) est commandé par un dispositif de commande (1) du système d'arme (10) et par un utilisateur (2) du système d'arme (10), le procédé (M) comprenant les étapes consistant à :
déterminer (M1) un degré d'autonomie actuel du système d'arme (10) par un dispositif de régulation (3) du système d'arme, dans lequel le système d'arme (10) doit fonctionner ;
activer (M2) le degré d'autonomie actuel dans le système d'arme (10) par le dispositif de régulation (3) ;
commander (M3) la fonction et/ou le dispositif (5, 6, 7, 8, 9, 11, 17) du système d'arme (10) en fonction du degré d'autonomie activé par le dispositif de commande (1) ; et réguler (M4) le degré d'autonomie actuel en fonction de paramètres opérationnels par le dispositif de régulation (3) ;
**caractérisé en ce que**
les paramètres opérationnels comprennent un état d'utilisateur de l'utilisateur (2) du système d'arme (10), qui est détecté par un dispositif de détection (5) du système d'arme et qui comprend des paramètres vitaux de l'utilisateur (2).

2. Procédé (M) selon la revendication 1, dans lequel les degrés d'autonomie comprennent au moins l'un d'un fonctionnement entièrement autonome, d'un fonctionnement autonome supervisé, d'un fonctionnement semi-autonome et d'un fonctionnement manuel.

3. Procédé (M) selon l'une des revendications 1 et 2, dans lequel des limites de degré d'autonomie, à l'intérieur desquelles le degré d'autonomie est régulé, sont prédéfinies.

4. Procédé (M) selon l'une des revendications 1 à 3, dans lequel la fonction et/ou le dispositif (5, 6, 7, 8, 9, 11, 17) comprennent au moins l'un du dispositif de détection (5), d'un dispositif de planification (6), d'un dispositif de décision (7), d'un dispositif actionneur (8), d'un dispositif effecteur (9) et d'un système d'action (11) du système d'arme (10).

5. Système d'arme (10), comprenant :
un dispositif de commande (1) qui est conçu pour commander une fonction et/ou un dispositif (5, 6, 7, 8, 9, 11, 17) du système d'arme (10) en fonction d'un degré d'autonomie activé, le degré d'autonomie activé pouvant être sélectionné parmi plusieurs degrés d'autonomie qui déterminent respectivement dans quelle proportion la fonction et/ou le dispositif (5, 6, 7, 8, 9, 11, 17) du système d'arme (10) est commandé par le dispositif de commande (1) et par un utilisateur (2) du système d'arme (10) ;
un dispositif de régulation (3) qui est conçu pour déterminer un degré d'autonomie actuel du système d'arme (10) dans lequel le système d'arme (10) doit fonctionner et pour activer le degré d'autonomie actuel dans le système d'arme (10), le dispositif de régulation (3) étant conçu pour réguler le degré d'autonomie actuel en fonction de paramètres opérationnels ;
**caractérisé par**
un dispositif de détection (5) qui est conçu pour détecter un état d'utilisateur de l'utilisateur (2) du système d'arme (10), les paramètres opérationnels comprenant l'état d'utilisateur de l'utilisateur (2), l'état d'utilisateur comprenant des paramètres vitaux de l'utilisateur (2).

6. Système d'arme (10) selon la revendication 5, dans lequel les degrés d'autonomie comprennent au moins l'un d'un fonctionnement entièrement autonome, d'un fonctionnement autonome supervisé, d'un fonctionnement semi-autonome et d'un fonctionnement manuel.

7. Système d'arme (10) selon l'une des revendications 5 et 6, dans lequel des limites de degré d'autonomie, à l'intérieur desquelles le degré d'autonomie peut être régulé, peuvent être prédéfinies.

8. Système d'arme (10) selon l'une des revendications 5 à 7, dans lequel la fonction et/ou le dispositif (5, 6, 7, 8, 9, 11, 17) comprennent au moins l'un du dispositif de détection (5), d'un dispositif de planification (6), d'un dispositif de décision (7), d'un dispositif actionneur (8), d'un dispositif effecteur (9) et d'un système actif (11) du système d'arme (10).

9. Système d'arme (10) selon l'une des revendications 5 à 8, dans lequel le système d'arme (10) est réalisé sous la forme d'un véhicule autonome (16), la fonction et/ou le dispositif (5, 6, 7, 8, 9, 11, 17) comprenant un système de conduite autonome (17) du véhicule autonome (16).
